# EUROPEAN PATENT APPLICATION

(11) **EP 3 681 205 A1**
(43) Date of publication of application: **15.07.2020**
(21) Application number: 18863258.2
(22) Date of filing: 28.09.2018
(51) Int. Cl.: H04W 52/02

(54) **DATA TRANSMISSION METHOD, NETWORK DEVICE AND TERMINAL DEVICE**

(30) Priority: 30.09.2017 CN 201710940547
(71) Applicant: Huawei Technologies Co., Ltd., Longgang District Shenzhen, Guangdong 518129 (CN)
(72) Inventor: WANG, Junwei, Shenzhen Guangdong 518129 (CN); FENG, Shulan, Shenzhen Guangdong 518129 (CN)
(74) Representative: Epping - Hermann - Fischer
(86) International application number: PCT/CN2018/108404
(87) International publication number: WO 2019/062869

(57) **Abstract**

Embodiments of this application disclose a data transmission method, a network device, and a terminal device, to reduce power consumption of the terminal device during data transmission. The method includes: configuring, by a network device, a first scheduling resource set for first service data, and configuring a second scheduling resource set for scheduling signaling that carries the first service data; determining, by the network device, a transmission resource for the first service data; sending, by the network device, the scheduling signaling to a terminal device in the second scheduling resource set, and sending the first service data to the terminal device in the transmission resource for the first service data; receiving, by the terminal device, data in the first scheduling resource set for the first service data, and receiving, in the second scheduling resource set for the scheduling signaling that carries the first service data, the scheduling signaling; and parsing, by the terminal device, the scheduling signaling, and obtaining the first service data from the data received in the first scheduling resource set.

## Description

This application claims priority to Chinese Patent Application No. 201710940547.3, filed with the Chinese Patent Office on September 30,2017 and entitled "DATA TRANSMISSION METHOD, NETWORK DEVICE, AND TERMINAL DEVICE", which is incorporated herein by reference in its entirety.

### TECHNICAL FIELD

This application relates to the field of communications technologies, and in particular, to a data transmission method, a network device, and a terminal device.

### BACKGROUND

In current 5G technologies, to ensure flexibility of data scheduling, a time division multiplexing (time division multiplexing, TDM) or frequency division multiplexing (frequency division multiplexing, FDM) manner may be used for data of a plurality of users in one slot (slot).

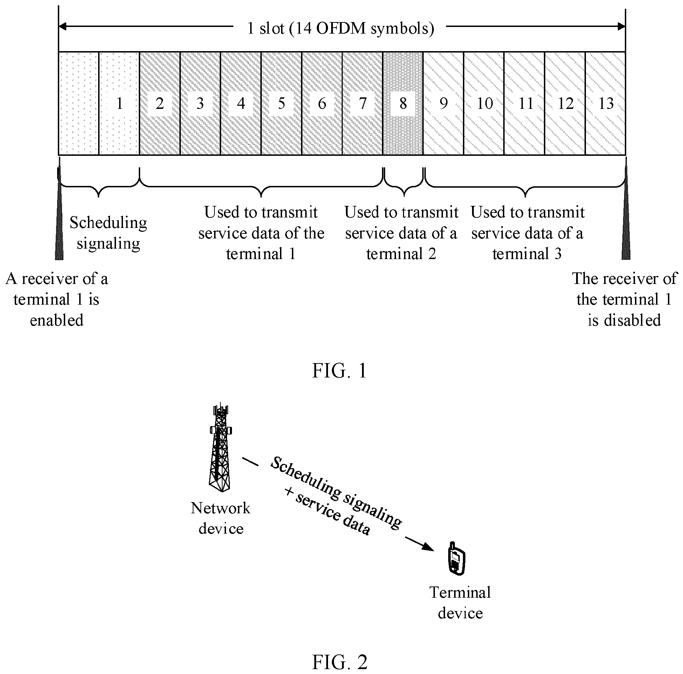

For example, in FIG. 1, one slot includes 14 orthogonal frequency division multiplexing (orthogonal frequency division multiplexing, OFDM) symbols. OFDM symbols numbered 0 and 1 carry scheduling signaling, OFDM symbols numbered from 2 to 7 carry service data of a terminal 1, an OFDM symbol numbered 8 carries service data of a terminal 2, and OFDM symbols numbered from 9 to 13 carry service data of a terminal 3. The terminal 1 is used as an example. In a current data transmission manner, the terminal 1 needs to receive all the data carried by the 14 OFDM symbols, then parses out, based on the scheduling signaling, the data carried by the OFDM symbols numbered from 2 to 7, and uses the data as data of the terminal 1. Consequently, in this manner, the terminal 1 receives useless data in the OFDM symbols numbered from 8 to 13, and the receiving of the useless data undoubtedly causes extra power consumption of the terminal.

In conclusion, in the solution provided in the prior art, there is a problem that the terminal has relatively large power consumption.

### SUMMARY

Embodiments of this application provide a data transmission method, a network device, and a terminal device, to reduce power consumption of the terminal device during data transmission.

According to a first aspect, an embodiment of this application provides a data transmission method. The method includes the following steps: configuring, by a network device, a first scheduling resource set for first service data, and configuring a second scheduling resource set for scheduling signaling that carries the first service data; determining, by the network device, a transmission resource for the first service data, where the transmission resource for the first service data is in the first scheduling resource set; and sending, by the network device, the scheduling signaling to a terminal device in the second scheduling resource set, and sending the first service data to the terminal device in the transmission resource for the first service data;

According to the data transmission method provided in the first aspect, the network device configures the first scheduling resource set for the first service data and configures the second scheduling resource set for the scheduling signaling that carries the first service data, sends the scheduling signaling to the terminal device in the second scheduling resource set, and sends the first service data to the terminal device in the transmission resource for the first service data. Therefore, the terminal device can receive data only in the first scheduling resource set and receive the scheduling signaling in the second scheduling resource set, instead of receiving data in an entire scheduling period, and by parsing the scheduling signaling, the terminal device parses out the first service data from the data received in the first scheduling resource set. The data transmission method provided in the first aspect avoids a problem in the prior art that power consumption of the terminal device is relatively large because the terminal device receives data in the entire scheduling period. In addition, because duration of receiving data by the terminal device is reduced, and a volume of received data is also reduced, a processing delay of the terminal device in service data is greatly reduced. Therefore, the processing delay of the terminal device may be further reduced by using the data transmission method provided in the first aspect.

In a possible design, before the network device sends the scheduling signaling to the terminal device in the second scheduling resource set, the network device may send a first message to the terminal device, where the first message is used to indicate the first scheduling resource set and/or the second scheduling resource set.

According to the foregoing solution, a manner of obtaining the first scheduling resource set by the terminal device is provided.

In a possible design, the first scheduling resource set is used to indicate some time-frequency resources occupied by the first service data in all time-frequency resources included in one scheduling period.

In a possible design, the first scheduling resource set and the second scheduling resource set are continuous in time domain; the first scheduling resource set and the second scheduling resource set are discontinuous in time domain; or the first scheduling resource set and the second scheduling resource set are frequency-division multiplexed.

According to the foregoing solution, three types of distribution relationships between the first scheduling resource set and the second scheduling resource set are provided. It may be understood that, in the three manners in which the first scheduling resource set and the second scheduling resource set are continuous in time domain; the first scheduling resource set and the second scheduling resource set are discontinuous in time domain; or the first scheduling resource set and the second scheduling resource set are frequency-division multiplexed, when the first scheduling resource set and the second scheduling resource set are discontinuous in time domain, time for enabling the receiver by the terminal device is greatly reduced compared with that used in a solution provided in the prior art. However, in this manner, the terminal device enables the receiver twice and disables the receiver twice in one scheduling period, also causing specific power consumption. When the first scheduling resource set and the second scheduling resource set are frequency-division multiplexed, for signaling or data transmitted on scheduling resources that are frequency-division multiplexed, processing difficulty of the terminal device is increased when the terminal device performs parsing. The foregoing two problems can be avoided by using the manner in which the first scheduling resource set and the second scheduling resource set are continuous in time domain. Compared with the other two manners, this manner can further reduce the power consumption of the terminal device, and further reduce the processing difficulty of the terminal device.

In a possible design, the first message is a broadcast message or a radio resource control RRC message.

In a possible design, the first service data is paging data.

In a possible design, the configuring, by a network device, a first scheduling resource set for first service data includes: configuring, by the network device, the first scheduling resource set based on a radio network temporary identifier RNTI of the terminal device.

According to the foregoing solution, the network device may configure the first scheduling resource set based on different terminal devices and different services of the terminal devices.

In a possible design, the first service data is random access response RAR data.

In a possible design, a scheduling resource occupied by the scheduling signaling and a scheduling resource occupied by the first service data are continuous in time domain.

According to the foregoing solution, when receiving the scheduling signaling and the first service data, the terminal device can further reduce time for which the receiver is enabled, thereby reducing the power consumption of the terminal device and reducing a delay in a random access process.

In a possible design, the network device may send a second message to the terminal device, where the second message is used to indicate a scheduling resource occupied by the terminal device to send a message 3 to the network device, the scheduling resource occupied by the terminal device to send the message 3 to the network device and the scheduling resource occupied by the first service data are spaced by duration of N, and N is equal to a sum of a delay in processing downlink data by the terminal device and a delay in performing uplink scheduling by the terminal device.

According to the foregoing solution, the delay in processing downlink data and the delay in processing uplink scheduling are considered. Therefore, after completing processing of the downlink data and processing of the uplink scheduling, the terminal device may send the message 3 (msg 3) to the network device in the scheduling resource indicated by the second message, to reserve processing time for processing of the downlink data and processing of the uplink scheduling.

In a possible design, the network device may receive a random access preamble sent by the terminal device; and determine N based on the received random access preamble or an uplink access resource of the random access preamble.

According to the foregoing solution, the random access preamble is a message 1 (msg 1) sent by the terminal device to the network device in the random access process. The terminal device may select different uplink access resources based on parameters such as a data processing capability and a message response rate of the terminal device, to send the random access preamble. In this case, the network device may determine a type of the terminal device based on a random access preamble sent by each terminal device or an uplink access resource occupied by the random access preamble, for example, determine a data processing capability of the terminal device, and further allocate different N to different terminal devices.

In a possible design, the network device sends a third message to the terminal device, where the third message is used to indicate that the first scheduling resource set is in an activated state or a deactivated state.

According to the foregoing solution, when the third message indicates that the first scheduling resource set is in the activated state, it means that the network device instructs the terminal device to enter a small-packet data transmission mode, and the terminal device may listen to a PDCCH and receive data in the first scheduling resource set.

In a possible design, the network device may send a fourth message to the terminal device, where the fourth message includes a physical downlink control channel PDCCH monitoring occasion and/or data transmission bandwidth.

According to the foregoing solution, after receiving the PDCCH monitoring occasion, the terminal device may monitor the PDCCH on the PDCCH monitoring occasion. After receiving the data transmission bandwidth, the terminal device may adjust an analog-to-digital (analog-to-digital, AD) sampling rate of the receiver based on the data transmission bandwidth.

According to a second aspect, an embodiment of this application provides a data transmission method. The method includes the following steps: receiving, by a terminal device, data in a first scheduling resource set for first service data, and receiving, in a second scheduling resource set for scheduling signaling that carries the first service data, the scheduling signaling; and parsing, by the terminal device, the scheduling signaling, and obtaining the first service data from the data received in the first scheduling resource set.

According to the data transmission method provided in the second aspect, the terminal device can receive data only in the first scheduling resource set and receive the scheduling signaling in the second scheduling resource set, instead of receiving data in an entire scheduling period, and by parsing the scheduling signaling, the terminal device parses out the first service data from the data received in the first scheduling resource set. The data transmission method provided in the second aspect avoids a problem in the prior art that power consumption of the terminal device is relatively large because the terminal device receives data in the entire scheduling period. In addition, because duration of receiving data by the terminal device is reduced, and a volume of received data is also reduced, a processing delay of the terminal device in service data is greatly reduced. Therefore, the processing delay of the terminal device may be further reduced by using the data transmission method provided in the second aspect.

In a possible design, before the receiving, by a terminal device, data in a first scheduling resource set for first service data, the method further includes: receiving, by the terminal device, a first message sent by the network device, where the first message is used to indicate the first scheduling resource set and/or the second scheduling resource set.

According to the foregoing solution, a manner of obtaining the first scheduling resource set by the terminal device is provided.

In a possible design, the first scheduling resource set is used to indicate some time-frequency resources occupied by the first service data in all time-frequency resources included in one scheduling period.

In a possible design, the first scheduling resource set and the second scheduling resource set are continuous in time domain; the first scheduling resource set and the second scheduling resource set are discontinuous in time domain; or the first scheduling resource set and the second scheduling resource set are frequency-division multiplexed.

According to the foregoing solution, three types of distribution relationships between the first scheduling resource set and the second scheduling resource set are provided. It may be understood that, in the three manners in which the first scheduling resource set and the second scheduling resource set are continuous in time domain; the first scheduling resource set and the second scheduling resource set are discontinuous in time domain; or the first scheduling resource set and the second scheduling resource set are frequency-division multiplexed, when the first scheduling resource set and the second scheduling resource set are discontinuous in time domain, time for enabling a receiver by the terminal device is greatly reduced compared with that used in a solution provided in the prior art. However, in this manner, the terminal device enables the receiver twice and disables the receiver twice in one scheduling period, also causing specific power consumption. When the first scheduling resource set and the second scheduling resource set are frequency-division multiplexed, for signaling or data transmitted on scheduling resources that are frequency-division multiplexed, processing difficulty of the terminal device is increased when the terminal device performs parsing. The foregoing two problems can be avoided by using the manner in which the first scheduling resource set and the second scheduling resource set are continuous in time domain. Compared with the other two manners, this manner can further reduce the power consumption of the terminal device, and further reduce the processing difficulty of the terminal device.

In a possible design, the first message is a broadcast message or a radio resource control RRC message.

In a possible design, the first service data is paging data.

In a possible design, the first service data is RAR data.

In a possible design, a scheduling resource occupied by the scheduling signaling and a scheduling resource occupied by the first service data are continuous in time domain.

According to the foregoing solution, when receiving the scheduling signaling and the first service data, the terminal device can further reduce the time for which the receiver is enabled, thereby reducing the power consumption of the terminal device and reducing a delay in a random access process.

In a possible design, the terminal device may receive a second message sent by the network device, where the second message is used to indicate a scheduling resource occupied by the terminal device to send a message 3 to the network device, the scheduling resource occupied by the terminal device to send the message 3 to the network device and the scheduling resource occupied by the first service data are spaced by duration of N, and N is equal to a sum of a delay in processing downlink data by the terminal device and a delay in performing uplink scheduling by the terminal device; and the terminal device sends the message 3 to the network device in the scheduling resource indicated by the second message.

According to the foregoing solution, the delay in processing downlink data and the delay in processing uplink scheduling are considered. Therefore, after completing processing of the downlink data and processing of the uplink scheduling, the terminal device may send the message 3 (msg 3) to the network device on the scheduling resource indicated by the second message, to reserve processing time for processing of the downlink data and processing of the uplink scheduling.

In a possible design, before the receiving, by the terminal device, a second message sent by the network device, the method further includes: sending, by the terminal device, a random access preamble to the network device, where the random access preamble or an uplink access resource of the random access preamble is used by the network device to determine N.

According to the foregoing solution, the random access preamble is a message 1 (msg 1) sent by the terminal device to the network device in the random access process. The terminal device may select different uplink access resources based on parameters such as a data processing capability and a message response rate of the terminal device, to send the random access preamble. In this case, the network device may determine a type of the terminal device based on a random access preamble sent by each terminal device or an uplink access resource occupied by the random access preamble, for example, determine a data processing capability of the terminal device, and further allocate different N to different terminal devices.

In a possible design, the terminal device receives a third message sent by the network device, where the third message is used to indicate that the first scheduling resource set is in an activated state or a deactivated state.

According to the foregoing solution, when the third message indicates that the first scheduling resource set is in the activated state, it means that the network device instructs the terminal device to enter a small-packet data transmission mode, and the terminal device may listen to a PDCCH and receive data in the first scheduling resource set.

In a possible design, the terminal device may receive a fourth message sent by the network device, where the fourth message includes a PDCCH monitoring occasion and/or data transmission bandwidth.

According to the foregoing solution, after receiving the PDCCH monitoring occasion, the terminal device may monitor the PDCCH on the PDCCH monitoring occasion. After receiving the data transmission bandwidth, the terminal device may adjust an AD sampling rate of the receiver based on the data transmission bandwidth.

In a possible design, the terminal device controls enabling and disabling of the receiver of the terminal device based on the first scheduling resource set.

According to the foregoing solution, the terminal device can reduce the time for which the receiver is enabled, thereby reducing the power consumption of the terminal device and reducing the delay in processing the service data.

According to a third aspect, an embodiment of this application provides a network device. The network device has a function of implementing the method example provided in the first aspect. The function may be implemented by hardware, or implemented by hardware executing corresponding software. The hardware or the software includes one or more modules corresponding to the function.

In a possible implementation, a structure of the network device includes a processing unit and a transceiver unit. The processing unit is configured to support the network device in performing the corresponding function in the method provided in the first aspect. The transceiver unit is configured to support communication between the network device and another device (including a terminal device). The network device may further include a storage unit. The storage unit is coupled to the processing unit, and the storage unit stores a program instruction and data that are necessary for the network device.

In another possible implementation, a structure of the network device includes a memory, a processor, and a communications module. The memory is configured to store a computer-readable program. The processor is configured to invoke an instruction stored in the memory, to perform the data transmission method provided in the first aspect. The communications module is configured to receive data and/or send data under control of the processor.

For example, the processing unit may be a processor, the transceiver unit may be a communications module, and the storage unit may be a memory. The communications module may be a plurality of elements, that is, may include a transmitter and a receiver, or include a communications interface. The communications interface has receiving and sending functions.

According to a fourth aspect, an embodiment of this application provides a terminal device. The terminal device has a function of implementing the method example provided in the second aspect. The function may be implemented by hardware, or implemented by hardware executing corresponding software. The hardware or the software includes one or more modules corresponding to the function.

In a possible implementation, a structure of the terminal device includes a processing unit and a transceiver unit. The processing unit is configured to support the terminal device in performing the corresponding function in the method provided in the second aspect. The transceiver unit is configured to support communication between the terminal device and another device (including a network device). The terminal device may further include a storage unit. The storage unit is coupled to the processing unit, and the storage unit stores a program instruction and data that are necessary for the terminal device.

In another possible implementation, a structure of the terminal device includes a memory, a processor, and a communications module. The memory is configured to store a computer-readable program. The processor is configured to invoke an instruction stored in the memory, to perform the data transmission method provided in the second aspect. The communications module is configured to receive data and/or send data under control of the processor.

For example, the processing unit may be a processor, the transceiver unit may be a communications module, and the storage unit may be a memory. The communications module may be a plurality of elements, that is, may include a transmitter and a receiver, or include a communications interface. The communications interface has receiving and sending functions.

According to a fifth aspect, an embodiment of this application provides a data transmission method. The method includes the following steps: configuring, by a network device, a first scheduling resource set for first service data, and configuring a second scheduling resource set for scheduling signaling that carries the first service data; sending, by the network device, the scheduling signaling to a terminal device in the second scheduling resource set; and sending, by the network device, the first service data to the terminal device in the first scheduling resource set.

In a possible design, the first scheduling resource set is in one slot in time domain.

In a possible design, the first scheduling resource set and the second scheduling resource set are in one slot in time domain.

In a possible design, the first scheduling resource set is a time-domain resource set, and the first scheduling resource set is in one slot.

In a possible design, the first scheduling resource set is a resource set preset in a protocol.

In a possible design, different first scheduling resource sets are used for different services.

According to a sixth aspect, an embodiment of this application provides a data transmission method. The method includes the following steps: receiving, by a terminal device, data in a first scheduling resource set for first service data, and receiving, in a second scheduling resource set for scheduling signaling that carries the first service data, the scheduling signaling; and parsing, by the terminal device, the scheduling signaling, and obtaining the first service data from the data received in the first scheduling resource set.

In a possible design, the first scheduling resource set is in one slot in time domain.

In a possible design, the first scheduling resource set and the second scheduling resource set are in one slot in time domain.

In a possible design, the first scheduling resource set is a time-domain resource set, and the first scheduling resource set is in one slot.

In a possible design, the first scheduling resource set is a resource set preset in a protocol.

In a possible design, different first scheduling resource sets are used for different services.

According to a seventh aspect, an embodiment of this application provides a network device, including: a processing unit, configured to: configure a first scheduling resource set for first service data, and configure a second scheduling resource set for scheduling signaling that carries the first service data; and a transceiver unit, configured to: send the scheduling signaling to a terminal device in the second scheduling resource set; and send the first service data to the terminal device in the first scheduling resource set.

In a possible design, the first scheduling resource set is in one slot in time domain.

In a possible design, the first scheduling resource set and the second scheduling resource set are in one slot in time domain.

In a possible design, the first scheduling resource set is a time-domain resource set, and the first scheduling resource set is in one slot.

In a possible design, the first scheduling resource set is a resource set preset in a protocol.

In a possible design, different first scheduling resource sets are used for different services.

According to an eighth aspect, an embodiment of this application provides a terminal device, including: a transceiver unit, configured to: receive data in a first scheduling resource set for first service data, and receive, in a second scheduling resource set for scheduling signaling that carries the first service data, the scheduling signaling; and a processing unit, configured to: parse the scheduling signaling, and obtain the first service data from the data received in the first scheduling resource set.

In a possible design, the first scheduling resource set is in one slot in time domain.

In a possible design, the first scheduling resource set and the second scheduling resource set are in one slot in time domain.

In a possible design, the first scheduling resource set is a time-domain resource set, and the first scheduling resource set is in one slot.

In a possible design, the first scheduling resource set is a resource set preset in a protocol.

In a possible design, different first scheduling resource sets are used for different services.

According to a ninth aspect, an embodiment of this application provides a communications system. The communications system includes the network device provided in the third aspect and the terminal device provided in the fourth aspect; or the communications system includes the network device provided in the seventh aspect and the terminal device provided in the eighth aspect.

According to a tenth aspect, an embodiment of this application further provides a computer storage medium. The storage medium stores a software program. When being read and executed by one or more processors, the software program can implement the data transmission method provided in the first aspect or any possible design of the first aspect, implement the data transmission method provided in the second aspect or any possible design of the second aspect, implement the data transmission method provided in the fifth aspect or any possible design of the fifth aspect, or implement the data transmission method provided in the sixth aspect or any possible design of the sixth aspect.

According to an eleventh aspect, an embodiment of this application further provides a computer program product including an instruction. When the computer program product is run on a computer, the computer is enabled to perform the data transmission method provided in the first aspect or any possible design of the first aspect, perform the data transmission method provided in the second aspect or any possible design of the second aspect, perform the data transmission method provided in the fifth aspect or any possible design of the fifth aspect, or perform the data transmission method provided in the sixth aspect or any possible design of the sixth aspect.

### BRIEF DESCRIPTION OF DRAWINGS

FIG. 1 is a schematic diagram of a data transmission method according to the prior art;
FIG. 2 is a schematic structural diagram of a wireless communications system according to an embodiment of this application;
FIG. 3 is a schematic flowchart of a data transmission method according to an embodiment of this application;
FIG. 4 is a schematic diagram of a first type of a first scheduling resource set and a second scheduling resource set according to an embodiment of this application;
FIG. 5 is a schematic diagram of obtaining first service data by a terminal device according to an embodiment of this application;
FIG. 6 is a schematic diagram of a second type of a first scheduling resource set and a second scheduling resource set according to an embodiment of this application;
FIG. 7 is a schematic diagram of a third type of a first scheduling resource set and a second scheduling resource set according to an embodiment of this application;
FIG. 8 is a schematic diagram of a fourth type of a first scheduling resource set and a second scheduling resource set according to an embodiment of this application;
FIG. 9 is a schematic diagram of a first type of resource distribution of scheduling resources according to an embodiment of this application;
FIG. 10 is a schematic diagram of a second type of resource distribution of scheduling resources according to an embodiment of this application;
FIG. 11 is a schematic diagram of a third type of resource distribution of scheduling resources according to an embodiment of this application;
FIG. 12 is a schematic diagram of a fourth type of resource distribution of scheduling resources according to an embodiment of this application;
FIG. 13 is a schematic structural diagram of a network device according to an embodiment of this application;
FIG. 14 is a schematic structural diagram of another network device according to an embodiment of this application;
FIG. 15 is a schematic structural diagram of a terminal device according to an embodiment of this application;
FIG. 16 is a schematic structural diagram of another terminal device according to an embodiment of this application; and
FIG. 17 is a schematic structural diagram of a communications system according to an embodiment of this application.

### DESCRIPTION OF EMBODIMENTS

To make the objectives, technical solutions, and advantages of this application clearer, the following further describes this application in detail with reference to the accompanying drawings.

It should be noted that, "a plurality of" means "two or more" in this application. In addition, it should be understood that in the descriptions of this application, terms such as "first" and "second" are merely used for differentiation and description, but should not be understood as indicating or implying relative importance, nor should be understood as indicating or implying a sequence.

The following first describes an application scenario of this application. In a wireless communications system shown in FIG. 2, in a downlink transmission process, a network device sends scheduling signaling and service data to a terminal device, and by parsing the scheduling signaling, the terminal device can obtain the service data sent by the network device to the terminal device.

The network device in the embodiments of this application may be a network device (base transceiver station, BTS) in a global system for mobile communications (global system for mobile communications, GSM) system or a code division multiple access (code division multiple access, CDMA) system, or may be a network device (NodeB) in a wideband code division multiple access (wide-band code division multiple access, WCDMA) system, or may be an evolved network device (evolutional node B, eNB or e-NodeB) in a long term evolution (long term evolution, LTE) system or a 5G base station in a 5G network architecture (next generation system), or may be a home evolved NodeB (home evolved node B, HeNB), a relay node (relay node), a home base station (femto), a picocell base station (pico), or the like. A type of the network device is not specifically limited in the embodiments of this application.

The terminal device in the embodiments of this application may be a device that provides a user with voice and/or data connectivity, a handheld device with a radio connection function, or another processing device connected to a wireless modem. The terminal device may communicate with one or more core networks through a radio access network (radio access network, RAN). The terminal device may be a mobile terminal, such as a mobile phone (also referred to as a "cellular" phone) and a computer corresponding to a mobile terminal, for example, may be a portable, pocket-sized, handheld, computer built-in, or vehicle-mounted mobile apparatus, which exchanges voice and/or data with the radio access network. For example, the terminal device may be a device such as a personal communication service (personal communication service, PCS) phone, a cordless telephone set, a session initiation protocol (session initiated protocol, SIP) phone, a wireless local loop (wireless local loop, WLL) station, or a personal digital assistant (personal digital assistant, PDA). The terminal device may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or user equipment (user equipment). This is not limited in the embodiments of this application.

The following specifically describes a data transmission solution provided in this application with reference to the accompanying drawings.

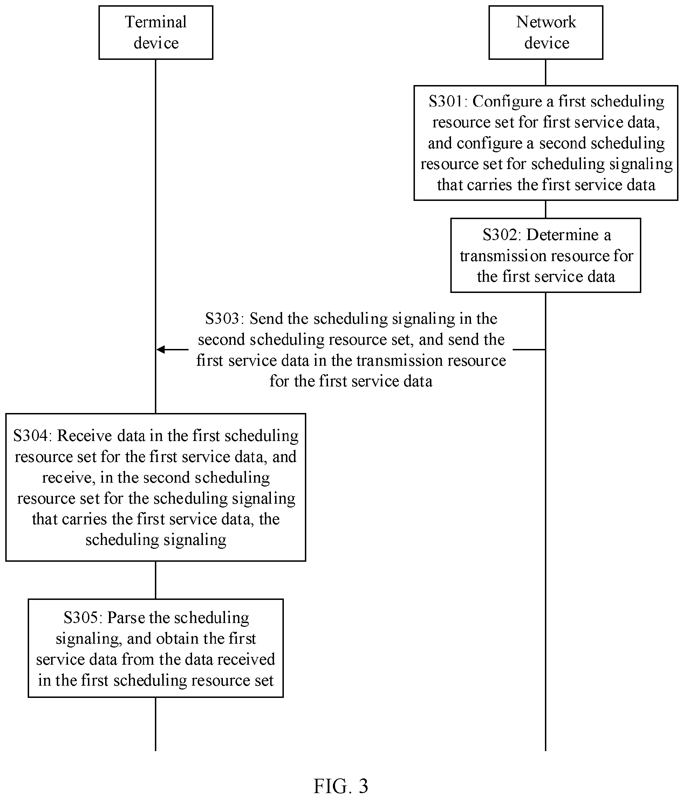

FIG. 3 is a schematic flowchart of a data transmission method according to an embodiment of this application.

S301: A network device configures a first scheduling resource set for first service data, and configures a second scheduling resource set for scheduling signaling that carries the first service data.

For example, the first service data may be paging data in a paging process, RAR data or contention resolution data in a random access process, or small-packet data received by a terminal device in a connected state, for example, mobile broadband (mobile broadband, MBB) small-packet data, WeChat small-packet data, or transmission control protocol (transmission control protocol). TCP) heartbeat packets.

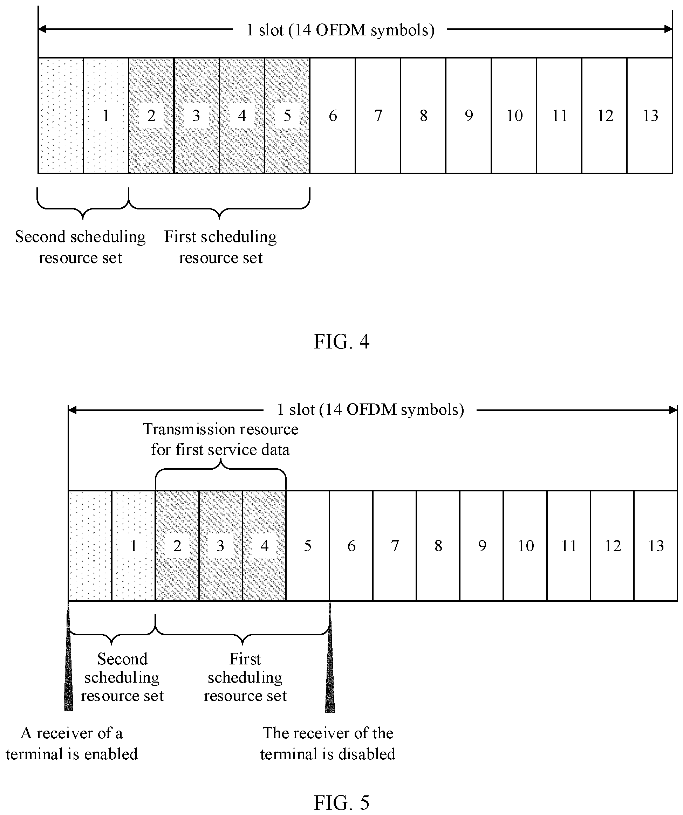

In S301, the first scheduling resource set may be used to indicate some time-frequency resources occupied by the first service data in all time-frequency resources included in one scheduling period. For example, in FIG. 4, one slot (slot) represents one scheduling period, one slot (slot) includes 14 OFDM symbols, and each OFDM symbol may represent one scheduling resource. A set of 14 OFDM symbols may be considered as all time-frequency resources included in one scheduling period, and OFDM symbols numbered from 2 to 5 may be considered as the first scheduling resource set. In addition, the second scheduling resource set may be used to indicate some other time-frequency resources occupied by the scheduling signaling in all the time-frequency resources included in the scheduling period. Still using FIG. 4 as an example, OFDM symbols numbered from 0 to 1 may be considered as the second scheduling resource set.

In addition, OFDM symbols numbered from 6 to 13 may be used to transmit data of another channel.

It should be noted that the scheduling period may be considered as a monitoring period of downlink control signaling corresponding to the first service data or the scheduling signaling. In FIG. 4, an example in which one slot (slot) represents one scheduling period is used for description. In actual implementation, one scheduling period is not limited to one slot (slot). One scheduling period may alternatively be one mini-slot or N slots, for example, four slots.

In this embodiment of this application, the first scheduling resource set and the second scheduling resource set may be understood as follows:

The first scheduling resource set may be used to transmit the first service data. It should be understood that the first scheduling resource set indicates only a selection range of scheduling resources occupied when the network device sends the first service data to the terminal device. During actual sending, the network device may select all or some scheduling resources from the first scheduling resource set to send the first service data.

The second scheduling resource set may be used to transmit the scheduling signaling that carries the first service data. For example, the scheduling signaling may be control signaling transmitted on a physical downlink control channel (physical downlink control channel, PDCCH). In this embodiment of this application, the second scheduling resource set may be understood as scheduling resources occupied when the network device actually sends the scheduling signaling, or may be understood as a selection range of scheduling resources occupied when the network device sends the scheduling signaling to the terminal device. In other words, when actually sending the scheduling signaling, the network device may send the scheduling signaling in a subset of the second scheduling resource set.

S302: The network device determines a transmission resource for the first service data.

The transmission resource for the first service data is in the first scheduling resource set. As described above, during actual sending, the network device may select all or some scheduling resources from the first scheduling resource set to send the first service data. The transmission resource for the first service data in S302 may be understood as all or some scheduling resources that are selected by the network device from the first scheduling resource set and that are used to send the first service data. In other words, in an actual process of sending the first service data, the scheduling resources occupied by the first service data are the transmission resource for the first service data.

S303: The network device sends the scheduling signaling to a terminal device in the second scheduling resource set, and sends the first service data to the terminal device in the transmission resource for the first service data.

S304: The terminal device receives data in the first scheduling resource set for the first service data, and receives, in the second scheduling resource set for the scheduling signaling that carries the first service data, the scheduling signaling.

When performing S304, the terminal device needs to learn of the first scheduling resource set and the second scheduling resource set. For the terminal device, there are two manners of obtaining the first scheduling resource set. Manner 1: The network device and the terminal device may agree on a preset first scheduling resource set in a standard, a protocol, or the like. Manner 2: Before performing S303 of sending the scheduling signaling to the terminal device, the network device may send a first message to the terminal device, where the first message is used to indicate the first scheduling resource set and/or the second scheduling resource set. After receiving the first message, the terminal device can obtain the first scheduling resource set and/or the second scheduling resource set.

In S304, because the terminal device needs to receive data only in the first scheduling resource set and the second scheduling resource set, the terminal device may control enabling and disabling of a receiver of the terminal device based on the first scheduling resource set. In other words, the receiver of the terminal device may be enabled only within a time corresponding to the first scheduling resource set and the second scheduling resource set, and may be disabled within a time corresponding to another scheduling resource in the scheduling period. In this way, time for which the receiver of the terminal device is enabled can be reduced, so that power consumption of the terminal device can be reduced.

The first message may be a broadcast message or a radio resource control (radio resource control, RRC) message.

S305: The terminal device parses the scheduling signaling, and obtains the first service data from the data received in the first scheduling resource set.

That the terminal device parses the scheduling signaling, and obtains the first service data from the data received in the first scheduling resource set may be specifically implemented in the following manner: The terminal device determines the transmission resource for the first service data by parsing the scheduling signaling, and further determines that, in the data received by the terminal device in the first scheduling resource set, data correspondingly received in the transmission resource for the first service data is the first service data.

FIG. 5 is used as an example. In FIG. 5, one slot (slot) includes 14 OFDM symbols, and each OFDM symbol may represent one scheduling resource. A set of 14 OFDM symbols may be considered as all time-frequency resources included in one scheduling period, OFDM symbols numbered from 2 to 5 may be considered as the first scheduling resource set, OFDM symbols numbered from 0 to 1 may be considered as the second scheduling resource set, and OFDM symbols numbered from 2 to 4 may be considered as the transmission resource for the first service data. The transmission resource for the first service data is in the first scheduling resource set. The terminal device receives the scheduling signaling in the OFDM symbols numbered from 0 to 1, and receives the data in the OFDM symbols numbered from 2 to 5. After parsing the scheduling signaling, the terminal device learns that the OFDM symbols numbered from 2 to 4 are the transmission resource for the first service data. Therefore, the terminal device can obtain, from the data received in the OFDM symbols numbered from 2 to 5, the data received in the OFDM symbols numbered from 2 to 4, that is, the first service data.

It should be noted that in the examples of FIG. 4 and FIG. 5, an example in which the first scheduling resource set and the first scheduling resource set are continuous in time domain is used for description. Actually, there may be the following three types of distribution relationships between the first scheduling resource set and the second scheduling resource set:

Type 1: The first scheduling resource set and the second scheduling resource set are continuous in time domain.

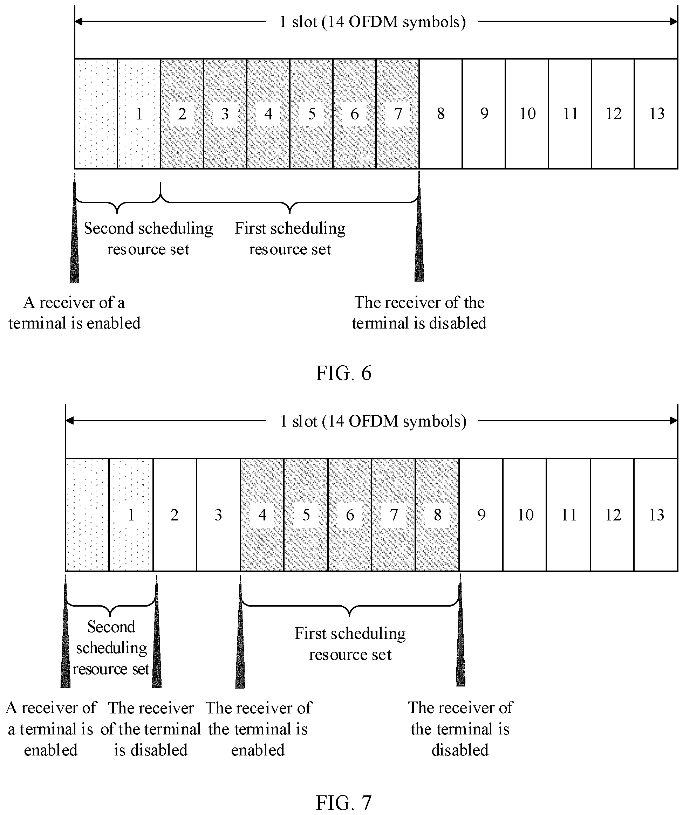

A first scheduling resource set and a second scheduling resource set shown in FIG. 6 are used as an example. In FIG. 6, one slot (slot) represents one scheduling period, one slot (slot) includes 14 OFDM symbols, and each OFDM symbol may represent one scheduling resource. A set of 14 OFDM symbols may be considered as all time-frequency resources included in one scheduling period, OFDM symbols numbered from 2 to 7 may be considered as the first scheduling resource set, and OFDM symbols numbered from 0 to 1 may be considered as the second scheduling resource set.

It is not difficult to understand that, according to the foregoing explanations, if the first scheduling resource set and the first scheduling resource set are distributed in the manner shown in FIG. 6, the receiver of the terminal device may be enabled only within a time corresponding to the first scheduling resource set and the second scheduling resource set, that is, enabled within a time corresponding to OFDM symbols numbered from 0 to 7.

Type 2: The first scheduling resource set and the second scheduling resource set are discontinuous in time domain.

A first scheduling resource set and a second scheduling resource set shown in FIG. 7 are used as an example. In FIG. 7, one slot (slot) represents one scheduling period, one slot (slot) includes 14 OFDM symbols, and each OFDM symbol may represent one scheduling resource. A set of 14 OFDM symbols may be considered as all time-frequency resources included in one scheduling period, OFDM symbols numbered from 4 to 8 may be considered as the first scheduling resource set, and OFDM symbols numbered from 0 to 1 may be considered as the second scheduling resource set.

It is not difficult to understand that, according to the foregoing explanations, if the first scheduling resource set and the first scheduling resource set are distributed in the manner shown in FIG. 7, the receiver of the terminal device may be enabled only within a time corresponding to the first scheduling resource set and the second scheduling resource set, that is, enabled within a time corresponding to OFDM symbols numbered from 0 to 1 and OFDM symbols numbered from 4 to 8.

Type 3: The first scheduling resource set and the second scheduling resource set are frequency-division multiplexed.

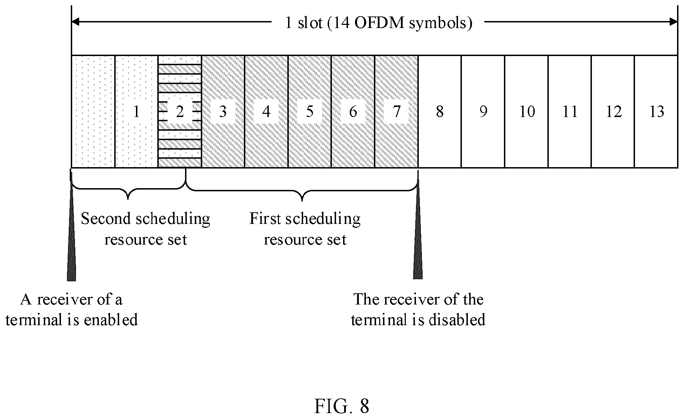

A first scheduling resource set and a second scheduling resource set shown in FIG. 8 are used as an example. In FIG. 8, one slot (slot) represents one scheduling period, one slot (slot) includes 14 OFDM symbols, and each OFDM symbol may represent one scheduling resource. A set of 14 OFDM symbols may be considered as all time-frequency resources included in one scheduling period, a set of some scheduling resources in OFDM symbols numbered from 3 to 7 and in an OFDM symbol numbered 2 may be considered as the first scheduling resource set, and a set of some scheduling resources in OFDM symbols numbered from 0 to 1 and an OFDM symbol numbered 2 may be considered as the second scheduling resource set.

It is not difficult to understand that, according to the foregoing explanations, if the first scheduling resource set and the first scheduling resource set are distributed in the manner shown in FIG. 8, the receiver of the terminal device may be enabled only within a time corresponding to the first scheduling resource set and the second scheduling resource set, that is, enabled within a time corresponding to OFDM symbols numbered from 0 to 7.

It may be understood that, in the three manners in which the first scheduling resource set and the second scheduling resource set are continuous in time domain; the first scheduling resource set and the second scheduling resource set are discontinuous in time domain; or the first scheduling resource set and the second scheduling resource set are frequency-division multiplexed, when the first scheduling resource set and the second scheduling resource set are discontinuous in time domain, time for enabling a receiver by the terminal device is greatly reduced compared with that used in a solution provided in the prior art. However, in this manner, the terminal device enables the receiver twice and disables the receiver twice in one scheduling period, also causing specific power consumption. When the first scheduling resource set and the second scheduling resource set are frequency-division multiplexed, for signaling or data transmitted on scheduling resources (for example, the scheduling resource numbered 2 in FIG. 8) that are frequency-division multiplexed, processing difficulty of the terminal device is increased when the terminal device performs parsing. The foregoing two problems can be avoided by using the manner in which the first scheduling resource set and the second scheduling resource set are continuous in time domain. Compared with the other two manners, this manner can further reduce the power consumption of the terminal device, and further reduce the processing difficulty of the terminal device.

Particularly, when the first scheduling resource set and the second scheduling resource set are continuous in time domain, and the network device sends a first message to the terminal device to indicate the first scheduling resource set and the second scheduling resource set, the network device may indicate only one scheduling resource set. The scheduling resource set includes the first scheduling resource set and the second scheduling resource set.

As described above, there may be a plurality of types of first service data. The following further describes, based on different types of the first service data, the data transmission method provided in the embodiments of this application in three embodiments.

Embodiment 1: The first service data is paging (paging) data.

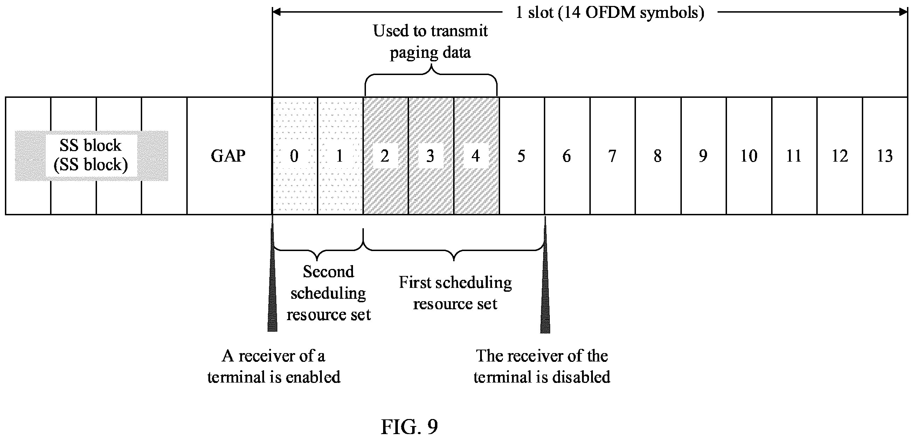

When the first service data is the paging data, a resource distribution diagram in a scheduling period may be shown in FIG. 9. In FIG. 9, one scheduling period includes 14 scheduling resources. A set of 14 scheduling resources may be considered as all time-frequency resources included in one scheduling period. A scheduling resource marked with SS block may be used to transmit a synchronization signal, a time marked with GAP may be used to process a code block, scheduling resources numbered from 2 to 5 may be considered as the first scheduling resource set, scheduling resources numbered from 0 to 1 may be considered as the second scheduling resource set, scheduling resources numbered from 2 to 4 may be considered as the transmission resource for the first service data that is used to transmit the paging data, and scheduling resources numbered from 5 to 13 may be used to transmit data of another channel.

Optionally, when the first service data is the paging (paging) data, before the network device configures the first scheduling resource set for the first service data in S301, the network device may configure the first scheduling resource set based on a radio network temporary identifier (radio network temporary identifier, RNTI) of the terminal device. In addition, if a downlink control channel is a common control channel, the network device may configure the first scheduling resource set for different services based on different RNTIs.

When configuring the first scheduling resource set for different services of the terminal device, the network device may configure different first scheduling resource sets for the different services. When the network device configures different first scheduling resource sets for the different services, the following scenario may occur: In a scheduling period, the network device needs to transmit data of a plurality of types of services to the terminal device. In this case, the terminal device needs to combine first scheduling resource sets corresponding to the plurality of types of services, and receive the data on a scheduling resource set obtained after combination.

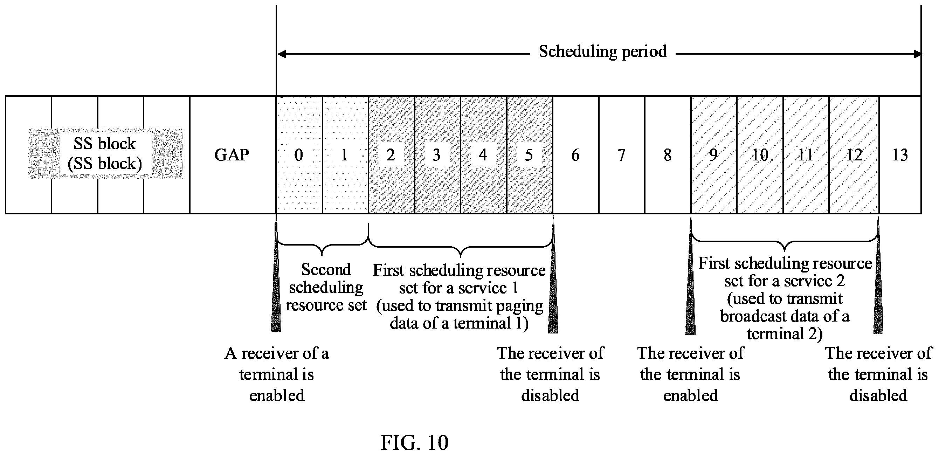

FIG. 10 is used as an example. A period at which the terminal device listens to a paging message is Is, and a period at which the terminal device listens to a broadcast message is 10s. In this case, in a scheduling period, the network device transmits both paging data and broadcast data. Scheduling resources that are in the first scheduling resource set and that correspond to the paging data are 2 to 5, and scheduling resources that are in the first scheduling resource set and that correspond to the broadcast data are 9 to 12. In the scheduling period, the terminal device may enable the receiver in the scheduling resources 2 to 5 and the scheduling resources 9 to 12, to receive the paging data and the broadcast data respectively.

Certainly, if only one type of service data is included in a scheduling period, the terminal device may receive the service data in a first scheduling resource set corresponding only to the service data.

Embodiment 2: The first service data is RAR data.

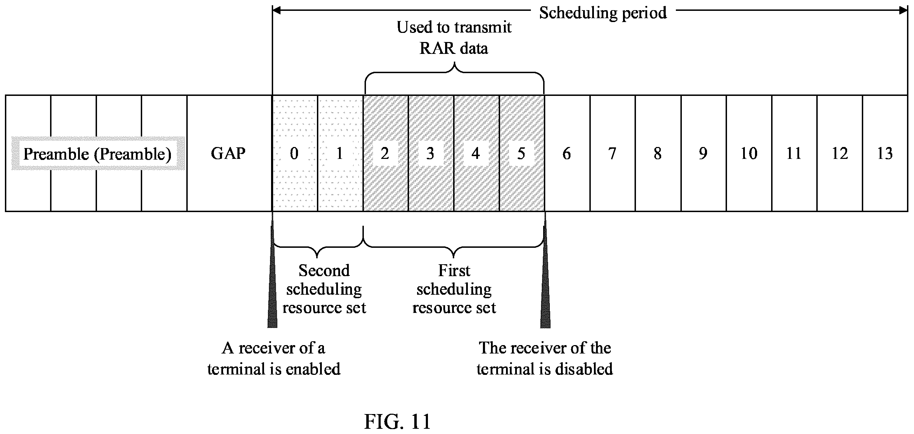

When the first service data is the RAR data, a resource distribution diagram in a scheduling period may be shown in FIG. 11. In FIG. 11, one scheduling period includes 14 scheduling resources. A set of 14 scheduling resources may be considered as all time-frequency resources included in one scheduling period. A scheduling resource marked with Preamble may be used to transmit a random access preamble (random access preamble, RACH), a time marked with GAP may be used to process a code block, scheduling resources numbered from 2 to 5 may be considered as the first scheduling resource set, scheduling resources numbered from 0 to 1 may be considered as the second scheduling resource set, scheduling resources numbered from 2 to 5 may be considered as the transmission resource for the first service data that is used to transmit the RAR data, and scheduling resources numbered from 6 to 13 may be used to transmit data of another channel.

The RAR is a message 2 (msg 2) sent by the network device to the terminal device in a random access process of the terminal device.

It should be noted that when the first service data is the RAR data, the first scheduling resource set may be the same as the transmission resource for the first service data. Because in a random access process, the network device may learn, based on preconfigured information, a quantity of scheduling resources occupied by the RAR data sent to the terminal device. Therefore, when configuring the first scheduling resource set, the network device can accurately configure specific scheduling resources in which the RAR data is subsequently sent.

For example, the preconfigured information of the RAR data may be shown in the following table:

| | RAR data |
|---|---|
| Preconfiguration 1: | 2 symbols |
| Preconfiguration 2 | 4 symbols |
| Preconfiguration 3 | 7 symbols |

In this case, in the schematic distribution diagram of the scheduling resources shown in FIG. 11, it may be considered that the RAR data uses the preconfiguration 2. The network device may configure the scheduling resources numbered from 2 to 5 as the first scheduling resource set, and transmits, in the first scheduling resource set, RAR data that occupies four symbols. In this case, the first scheduling resource set is the same as the transmission resource for the first service data.

Optionally, the network device may further send a second message to the terminal device, where the second message is used to indicate a scheduling resource occupied by the terminal device to send a message 3 (msg 3) to the network device, the scheduling resource occupied by the terminal device to send the message 3 (msg 3) to the network device and the scheduling resource occupied by the first service data are spaced by duration of N, and N is equal to a sum of a delay in processing downlink data by the terminal device and a delay in performing uplink scheduling by the terminal device. Therefore, after receiving the second message, the terminal device may send the message 3 (msg 3) to the network device in the scheduling resource indicated by the second message.

In this embodiment of this application, N is the duration spaced between the scheduling resource occupied by the terminal device to send the message 3 (msg 3) to the network device, and the scheduling resource occupied by the first service data. Specifically, N may be understood as follows: N is a time difference between the last symbol in the first service data and the first symbol in the message 3 (msg 3) in time domain.

In this embodiment of this application, the message 3 (msg 3) is a message 3 (msg 3) sent by the terminal device to the network device in a random access process, and the message 3 (msg 3) carries an identifier of the terminal device, which may be, for example, a cell radio network temporary identifier (cell radio network temporary identifier, C-RNTI), a temporary mobile subscriber identity (SAE-temporary mobile subscriber identity, S-TMSI), or a random number.

It should be noted that the second message may be a message the same as the first message, or may be a message different from the first message. This is not limited in this embodiment of this application.

In the foregoing solution, the delay in processing downlink data and the delay in processing uplink scheduling are considered. Therefore, after completing processing of the downlink data and processing of the uplink scheduling, the terminal device may send the message 3 (msg 3) to the network device in the scheduling resource indicated by the second message, to reserve processing time for processing of the downlink data and processing of the uplink scheduling.

The delay in processing downlink data may be defined as a difference between a time at which the terminal device sends a HARQ-ACK (or HARQ-NACK) message and a time at which the terminal device receives the last symbol in the first service data. The delay in processing uplink scheduling may be understood as a difference between a time at which the terminal device sends the first symbol in the uplink data and a time at which the terminal device receives the last symbol in the PDCCH channel.

Assuming that the delay in processing downlink data is N1, and the delay in processing uplink scheduling is N2, for values of N1 and N2, there may be the following implementations: The network device defines different N1 and N2 for different types of terminal devices. The network device defines default N1 and N2 for all terminal devices.

In other words, the network device may define different N for different types of terminal devices; or the network device may define default N for all terminal devices.

In addition, before the terminal device receives the second message sent by the network device, the terminal device may send a random access preamble to the network device, and the network device may determine N based on the random access preamble or an uplink access resource used by the random access preamble. The uplink access resource includes a time domain resource and/or a frequency domain resource.

The random access preamble is a message 1 (msg 1) sent by the terminal device to the network device in the random access process, and based on a processing capability or a service type of the terminal device, for example, ultra-reliable low-latency communication (ultra-reliable low latency communications, URLLC), massive machine-type communications (massive machine type of communication, mMTC), or enhanced mobile broadband (enhance mobile broadband, eMBB), the terminal device may select different uplink access resources to send the random access preamble. In this case, the network device may determine a type of the terminal device based on a random access preamble sent by each terminal device or an uplink access resource occupied by the random access preamble, for example, determine a data processing capability of the terminal device, and further allocate different N to different terminal devices.

For example, a terminal device 1 with a relatively strong processing capability selects an uplink access resource 1 to send the random access preamble, and a terminal device 2 with a relatively weak processing capability selects an uplink access resource 2 to send the random access preamble. After receiving the random access preambles from the two uplink access resources, the network device may configure a relatively small value of N for the terminal device 1 with a relatively strong processing capability and configure a relatively large value of N for the terminal device 2 with a relatively weak processing capability, based on the random access preambles or the uplink access resources occupied by the random access preambles.

In addition, it should be noted that because the random access process of the terminal device has a relatively high requirement on a delay, in Embodiment 2, the implementation in which the first scheduling resource set and the second scheduling resource set are continuous in time domain may be used. Further, it may be set that the scheduling resource occupied by the scheduling signaling and the scheduling resource occupied by the first service data are continuous in time domain. In this way, when receiving the scheduling signaling and the first service data, the terminal device can further reduce the time for which the receiver is enabled, thereby reducing the power consumption of the terminal device and reducing a delay in a random access process.

It should also be noted that Embodiment 2 is described by using an example in which the first service data is the RAR data. In actual implementation, the first service data may alternatively be contention resolution data, that is, a message 4 (msg 4) sent by the network device to the terminal device in a random access process of the terminal device.

Embodiment 3: The first service data is physical downlink shared channel (physical downlink shared channel, PDSCH) small-packet data.

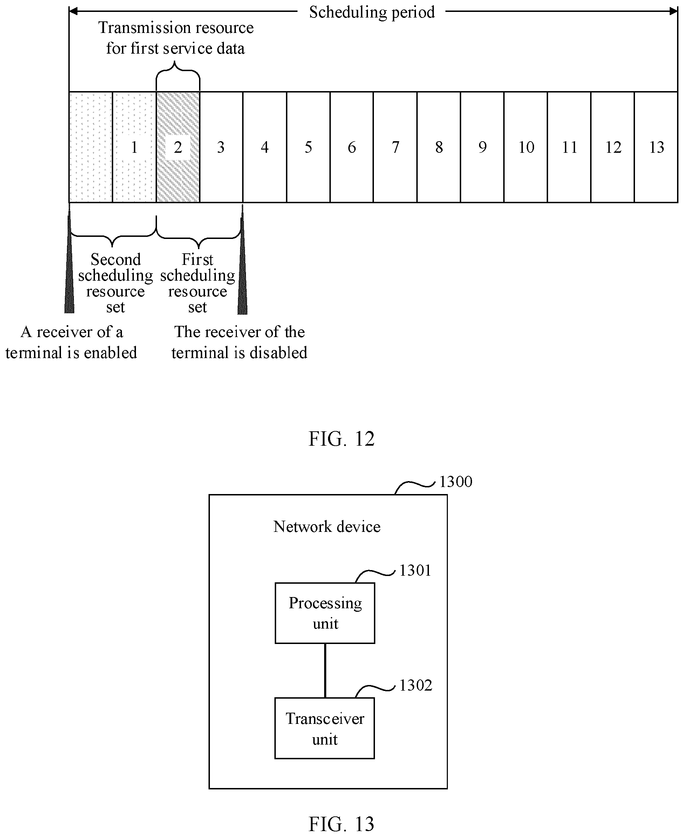

When the first service data is the PDSCH small-packet data, a resource distribution diagram in the scheduling period may be shown in FIG. 12. In FIG. 12, one scheduling period includes 14 scheduling resources. A set of 14 scheduling resources may be considered as all time-frequency resources included in one scheduling period. Scheduling resources numbered from 2 to 3 may be considered as the first scheduling resource set, scheduling resources numbered from 0 to 1 may be considered as the second scheduling resource set, a scheduling resource numbered 2 may be considered as the transmission resource for the first service data that is used to transmit the paging data, and scheduling resources numbered from 3 to 13 may be used to transmit data of another channel.

For example, a small data packet may be MBB small-packet data, WeChat small-packet data, a TCP heartbeat packet, or the like.

Optionally, when the first service data is the PDSCH small-packet data, the network device may send a third message to the terminal device, where the third message is used to indicate that the first scheduling resource set is in an activated state or a deactivated state. When the terminal device receives the third message sent by the network device, if the third message indicates that the first scheduling resource set is in the activated state, the terminal device may perform S304 of receiving data in the first scheduling resource set for the first service data, and receiving, in the second scheduling resource set for the scheduling signaling that carries the first service data, the scheduling signaling.

The network device sends the third message to the terminal device to indicate that the first scheduling resource set is in the activated state, to instruct the terminal device to enter a small-packet data transmission mode, and the terminal device may listen to a PDCCH and receive data in the first scheduling resource set. For example, when the terminal device enters a connected mode-discontinuous reception (connected mode-discontinuous reception, C-DRX) state, the first scheduling resource set may be in the activated state.

Certainly, the network device may alternatively not send the third message. In this case, the terminal device needs to monitor each PDCCH.

It should be noted that the third message may be a message the same as the first message, or may be a message different from the first message. This is not limited in this embodiment of this application.

Optionally, when the first service data is the PDSCH small-packet data, the network device may send a fourth message to the terminal device, where the fourth message includes a PDCCH monitoring occasion and/or data transmission bandwidth.

After receiving the PDCCH monitoring occasion, the terminal device may monitor the PDCCH on the PDCCH monitoring occasion. After receiving the data transmission bandwidth, the terminal device may adjust an AD sampling rate of the receiver based on the data transmission bandwidth.

It should be noted that the fourth message may be a message the same as the first message, or may be a message different from the first message. This is not limited in this embodiment of this application.

The foregoing describes the data transmission method provided in the embodiments of this application. According to the data transmission method provided in the embodiments of this application, the network device configures the first scheduling resource set for the first service data and configures the second scheduling resource set for the scheduling signaling that carries the first service data, sends the scheduling signaling to the terminal device in the second scheduling resource set, and sends the first service data to the terminal device in the transmission resource for the first service data. Therefore, the terminal device can receive data only in the first scheduling resource set and receive the scheduling signaling in the second scheduling resource set, instead of receiving data in an entire scheduling period, and by parsing the scheduling signaling, the terminal device parses out the first service data from the data received in the first scheduling resource set. The data transmission method provided in the embodiments of this application avoids a problem in the prior art that power consumption of the terminal device is relatively large because the terminal device receives data in the entire scheduling period. In addition, because duration of receiving data by the terminal device is reduced, and a volume of received data is also reduced, a processing delay of the terminal device in service data is greatly reduced. Therefore, the processing delay of the terminal device may be further reduced by using the data transmission method provided in this embodiment of this application.

Based on a same inventive concept, an embodiment of this application further provides a network device. The network device may be configured to perform the operations performed by the network device in the data transmission method shown in FIG. 3. Referring to FIG. 13, the network device 1300 includes a processing unit 1301 and a transceiver unit 1302.

The processing unit 1301 is configured to: configure a first scheduling resource set for first service data, and configure a second scheduling resource set for scheduling signaling that carries the first service data.

The processing unit 1301 is further configured to determine a transmission resource for the first service data, where the transmission resource for the first service data is in the first scheduling resource set.

The transceiver unit 1302 is configured to: send the scheduling signaling to a terminal device in the second scheduling resource set, and send the first service data to the terminal device in the transmission resource for the first service data.

Optionally, the transceiver unit 1302 is further configured to: before sending the scheduling signaling to the terminal device, send a first message to the terminal device, where the first message is used to indicate the first scheduling resource set and/or the second scheduling resource set.

Optionally, the first scheduling resource set is used to indicate some time-frequency resources occupied by the first service data in all time-frequency resources included in one scheduling period.

Optionally, the first scheduling resource set and the second scheduling resource set are continuous in time domain; the first scheduling resource set and the second scheduling resource set are discontinuous in time domain; or the first scheduling resource set and the second scheduling resource set are frequency-division multiplexed.

Optionally, the first message is a broadcast message or a radio resource control RRC message.

Optionally, the first service data is paging data.

Optionally, when configuring the first scheduling resource set for the first service data, the processing unit 1301 is specifically configured to configure the first scheduling resource set based on a radio network temporary identifier RNTI of the terminal device.

Optionally, the first service data is random access response RAR data.

Optionally, a scheduling resource occupied by the scheduling signaling and a scheduling resource occupied by the first service data are continuous in time domain.

Optionally, the transceiver unit 1302 is further configured to send a second message to the terminal device, where the second message is used to indicate a scheduling resource occupied by the terminal device to send a message 3 to the network device, the scheduling resource occupied by the terminal device to send the message 3 to the network device and the scheduling resource occupied by the first service data are spaced by duration of N, and N is equal to a sum of a delay in processing downlink data by the terminal device and a delay in performing uplink scheduling by the terminal device.

Optionally, the transceiver unit 1302 is further configured to: receive a random access preamble sent by the terminal device; and determine N based on the received random access preamble or an uplink access resource of the random access preamble.

Optionally, the transceiver unit 1302 is further configured to send a third message to the terminal device, where the third message is used to indicate that the first scheduling resource set is in an activated state or a deactivated state.

Optionally, the transceiver unit 1302 is further configured to send a fourth message to the terminal device, where the fourth message includes a physical downlink control channel PDCCH monitoring occasion and/or data transmission bandwidth.

It should be noted that, in this embodiment of this application, unit division is used as an example, and is merely a logical function division. In actual implementation, another division manner may be used. Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

It should be noted that the network device 1300 may be configured to perform the operations performed by the network device in the data transmission method shown in FIG. 3. For an implementation that is not described in detail in the embodiment of the network device 1300, refer to the related descriptions of the data transmission method shown in FIG. 3.

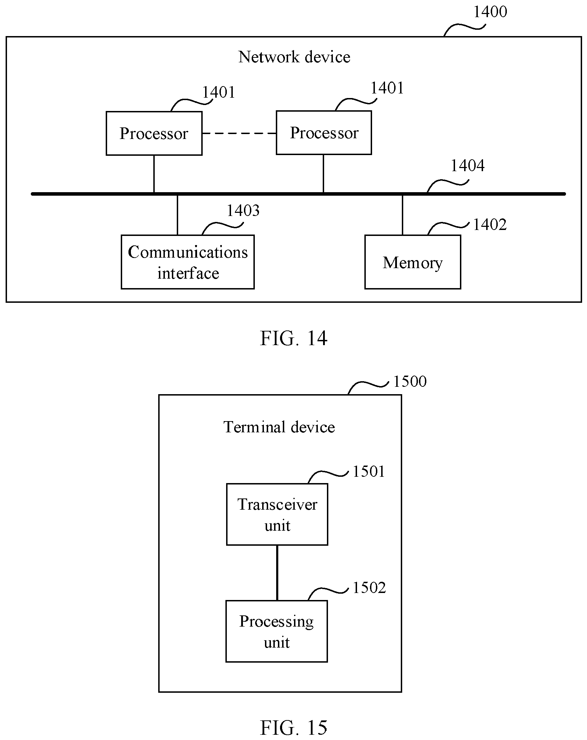

Based on a same inventive concept, an embodiment of this application further provides a network device. The network device may be configured to perform the operations performed by the network device in the data transmission method shown in FIG. 3, and may be a device the same as the network device 1300. Referring to FIG. 14, the network device 1400 includes at least one processor 1401, a memory 1402, and a communications interface 1403. The at least one processor 1401, the memory 1402, and the communications interface 1403 are all connected by using the bus 1404.

The memory 1402 is configured to store a computer executable instruction.

The at least one processor 1401 is configured to execute a computer executable instruction stored in the memory 1402, so that the network device 1400 exchanges data with another device (for example, a terminal device) in a communications system by using the communications interface 1403, to perform the data transmission method provided in the foregoing embodiments, or the network device 1400 exchanges data with another device (for example, a terminal device) in a communications system by using the communications interface 1403, to implement some or all functions of the communications system.

The at least one processor 1401 may include different types of processors 1401, or include a same type of processors 1401. The processor 1401 may be any one of the following components with a calculation and processing capability: a central processing unit (central processing unit, CPU), an ARM processor, a field programmable gate array (field programmable gate array, FPGA), a dedicated processor, and the like. In an optional implementation, the at least one processor 1401 may be integrated as a many-core processor.

The memory 1402 may be any one or any combination of the following storage media, such as a random access memory (random access memory, RAM), a read-only memory (read only memory, ROM), a non-volatile memory (non-volatile memory, NVM), a solid-state drive (solid state drives, SSD), a mechanical hard disk, a magnetic disk, and a disk array.

The communications interface 1403 is used by the network device 1400 to exchange data with another device (for example, a terminal device). The communications interface 1403 may be any one or any combination of the following components with a network access function, such as a network interface (for example, an Ethernet interface) and a wireless network interface card.

The bus 1404 may include an address bus, a data bus, a control bus, and the like. For ease of denotation, the bus is represented by using a thick line in FIG. 14. The bus 1404 may be any one or any combination of the following components used for wired data transmission, such as an industry standard architecture (industry standard architecture, ISA) bus, a peripheral component interconnect (peripheral component interconnect, PCI) bus, and an extended industry standard architecture (extended industry standard architecture, EISA) bus.

It should be noted that the network device 1400 may be configured to perform the operations performed by the network device in the data transmission method shown in FIG. 3, and may be a device the same as the network device 1300. For an implementation that is not described in detail in the embodiment of the network device 1400, refer to the related descriptions of the data transmission method shown in FIG. 3.

Based on a same inventive concept, an embodiment of this application further provides a terminal device. The terminal device may be configured to perform the operations performed by the terminal device in the data transmission method shown in FIG. 3. Referring to FIG. 15, the terminal device 1500 includes a transceiver unit 1501 and a processing unit 1502.

The transceiver unit 1501 is configured to: receive data in a first scheduling resource set for first service data, and receive, in a second scheduling resource set for scheduling signaling that carries the first service data, the scheduling signaling.

The processing unit 1502 is configured to: parse the scheduling signaling, and obtain the first service data from the data received in the first scheduling resource set.

Optionally, the transceiver unit 1501 is further configured to: before receiving the data in the first scheduling resource set for the first service data, receive a first message sent by the network device, where the first message is used to indicate the first scheduling resource set and/or the second scheduling resource set.

Optionally, the first scheduling resource set is used to indicate some time-frequency resources occupied by the first service data in all time-frequency resources included in one scheduling period.

Optionally, the first scheduling resource set and the second scheduling resource set are continuous in time domain; the first scheduling resource set and the second scheduling resource set are discontinuous in time domain; or the first scheduling resource set and the second scheduling resource set are frequency-division multiplexed.

Optionally, the first message is a broadcast message or a radio resource control RRC message.

Optionally, the first service data is paging data.

Optionally, the first service data is RAR data.

Optionally, a scheduling resource occupied by the scheduling signaling and a scheduling resource occupied by the first service data are continuous in time domain.

Optionally, the transceiver unit 1501 is further configured to: receive a second message sent by the network device, where the second message is used to indicate a scheduling resource occupied by the terminal device to send a message 3 to the network device, the scheduling resource occupied by the terminal device to send the message 3 to the network device and the scheduling resource occupied by the first service data are spaced by duration of N, and N is equal to a sum of a delay in processing downlink data by the terminal device and a delay in performing uplink scheduling by the terminal device; and send the message 3 to the network device in the scheduling resource indicated by the second message.

Optionally, the transceiver unit 1501 is further configured to: before receiving the second message sent by the network device, send a random access preamble to the network device, where the random access preamble or an uplink access resource of the random access preamble is used by the network device to determine N.

Optionally, the transceiver unit 1501 is further configured to receive a third message sent by the network device, where the third message is used to indicate that the first scheduling resource set is in an activated state or a deactivated state.

Optionally, the transceiver unit 1501 is further configured to receive a fourth message sent by the network device, where the fourth message includes a PDCCH monitoring occasion and/or data transmission bandwidth.

Optionally, the processing unit 1502 is further configured to control enabling and disabling of a receiver of the terminal device based on the first scheduling resource set.

It should be noted that the terminal device 1500 may be configured to perform the operations performed by the terminal device in the data transmission method shown in FIG. 3. For an implementation that is not described in detail in the embodiment of the terminal device 1500, refer to the related descriptions of the data transmission method shown in FIG. 3.

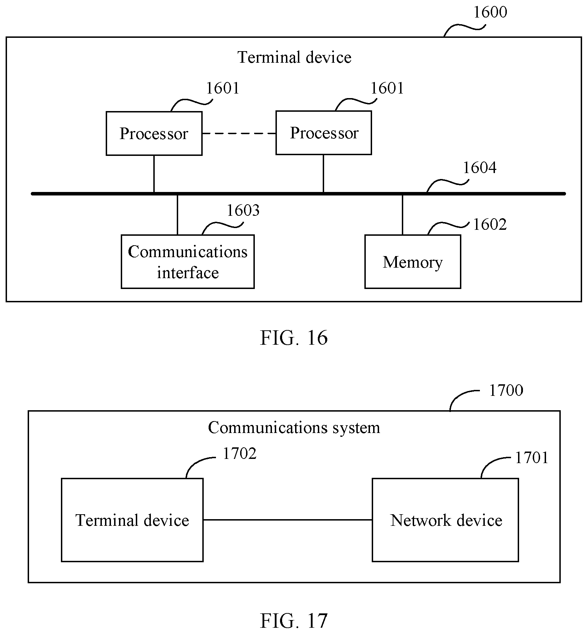

Based on a same inventive concept, an embodiment of this application further provides a terminal device. The terminal device may be configured to perform the operations performed by the terminal device in the data transmission method shown in FIG. 3, and may be a device the same as the terminal device 1500. Referring to FIG. 16, the terminal device 1600 includes at least one processor 1601, a memory 1602, and a communications interface 1603. The at least one processor 1601, the memory 1602, and the communications interface 1603 are all connected by using the bus 1604.

The memory 1602 is configured to store a computer executable instruction:

The at least one processor 1601 is configured to execute a computer executable instruction stored in the memory 1602, so that the terminal device 1600 exchanges data with another device (for example, a network device) in a communications system by using the communications interface 1603, to perform the data transmission method provided in the foregoing embodiments, or the terminal device 1600 exchanges data with another device (for example, a network device) in a communications system by using the communications interface 1603, to implement some or all functions of the communications system.

The at least one processor 1601 may include different types of processors 1601, or include a same type of processors 1601. The processor 1601 may be any one of the following components with a calculation and processing capability: a CPU, an ARM processor, an FPGA, a dedicated processor, and the like. In an optional implementation, the at least one processor 1601 may be integrated as a many-core processor.

The memory 1602 may be any one or any combination of the following storage media: a RAM, a ROM, an NVM, an SSD, a mechanical hard disk, a magnetic disk, a disk array, and the like.

The communications interface 1603 is used by the terminal device 1600 to exchange data with another device (for example, a network device). The communications interface 1603 may be any one or any combination of the following components with a network access function, such as a network interface (for example, an Ethernet interface) and a wireless network interface card.

The bus 1604 may include an address bus, a data bus, a control bus, and the like. For ease of denotation, the bus is represented by using a thick line in FIG. 16. The bus 1604 may be any one or any combination of the following components for wired data transmission: an ISA bus, a PCI bus, an EISA bus, and the like.

It should be noted that the terminal device 1600 may be configured to perform the operations performed by the terminal device in the data transmission method shown in FIG. 3, and may be a device the same as the terminal device 1500. For an implementation that is not described in detail in the embodiment of the terminal device 1600, refer to the related descriptions of the data transmission method shown in FIG. 3.

In addition, an embodiment of this application further provides a communications system. Referring to FIG. 17, the communications system 1700 includes a network device 1701 and a terminal device 1702. The network device 1701 may be the network device 1300 or the network device 1500, and the terminal device 1702 may be the terminal device 1400 or the terminal device 1600.

The network device 1701 and the terminal device 1702 in the communications system 1700 interact with each other, to implement the data transmission method shown in FIG. 3.

In conclusion, the embodiments of this application provide a data transmission method, a network device, and a terminal device, and power consumption of the terminal device can be reduced during data transmission by using the solutions provided in the embodiments of this application.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the spirit and scope of this application. This application is intended to cover these modifications and variations of this application provided that they fall within the scope of protection defined by the following claims and their equivalent technologies.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

## Claims

1. A data transmission method, comprising:
configuring, by a network device, a first scheduling resource set for first service data, and configuring a second scheduling resource set for scheduling signaling that carries the first service data;
determining, by the network device, a transmission resource for the first service data, wherein the transmission resource for the first service data is in the first scheduling resource set; and
sending, by the network device, the scheduling signaling to a terminal device in the second scheduling resource set, and sending the first service data to the terminal device in the transmission resource for the first service data.

2. The method according to claim 1, wherein before the sending, by the network device, the scheduling signaling to a terminal device in the second scheduling resource set, the method further comprises:
sending, by the network device, a first message to the terminal device, wherein the first message is used to indicate the first scheduling resource set and/or the second scheduling resource set.

3. The method according to claim 1 or 2, wherein the first scheduling resource set is used to indicate some time-frequency resources occupied by the first service data in all time-frequency resources comprised in one scheduling period.

4. The method according to any one of claims 1 to 3, wherein the first scheduling resource set and the second scheduling resource set are continuous in time domain;
the first scheduling resource set and the second scheduling resource set are discontinuous in time domain; or
the first scheduling resource set and the second scheduling resource set are frequency-division multiplexed.

5. The method according to any one of claims 1 to 4, wherein the first service data is paging data.

6. The method according to any one of claims 1 to 4, wherein the first service data is random access response RAR data.

7. The method according to claim 6, wherein a scheduling resource occupied by the scheduling signaling and a scheduling resource occupied by the first service data are continuous in time domain.

8. The method according to claim 6 or 7, further comprising:
sending, by the network device, a second message to the terminal device, wherein the second message is used to indicate a scheduling resource occupied by the terminal device to send a message 3 to the network device, the scheduling resource occupied by the terminal device to send the message 3 to the network device and the scheduling resource occupied by the first service data are spaced by duration of N, and N is equal to a sum of a delay in processing downlink data by the terminal device and a delay in performing uplink scheduling by the terminal device.

9. The method according to claim 8, further comprising:
receiving, by the network device, a random access preamble sent by the terminal device; and
determining, by the network device, N based on the received random access preamble or an uplink access resource of the random access preamble.

10. A data transmission method, comprising:
receiving, by a terminal device, data in a first scheduling resource set for first service data, and receiving, in a second scheduling resource set for scheduling signaling that carries the first service data, the scheduling signaling; and
parsing, by the terminal device, the scheduling signaling, and obtaining the first service data from the data received in the first scheduling resource set.

11. The method according to claim 10, wherein before the receiving, by a terminal device, data in a first scheduling resource set for first service data, the method further comprises:
receiving, by the terminal device, a first message sent by the network device, wherein the first message is used to indicate the first scheduling resource set and/or the second scheduling resource set.

12. The method according to claim 10 or 11, wherein the first scheduling resource set is used to indicate some time-frequency resources occupied by the first service data in all time-frequency resources comprised in one scheduling period.

13. The method according to any one of claims 10 to 12, wherein the first service data is paging data.

14. The method according to any one of claims 10 to 12, wherein the first service data is RAR data.

15. The method according to claim 14, further comprising:
receiving, by the terminal device, a second message sent by the network device, wherein the second message is used to indicate a scheduling resource occupied by the terminal device to send a message 3 to the network device, the scheduling resource occupied by the terminal device to send the message 3 to the network device and the scheduling resource occupied by the first service data are spaced by duration of N, and N is equal to a sum of a delay in processing downlink data by the terminal device and a delay in performing uplink scheduling by the terminal device; and
sending, by the terminal device, the message 3 to the network device in the scheduling resource indicated by the second message.

16. A network device, comprising:
a processing unit, configured to: configure a first scheduling resource set for first service data, and configure a second scheduling resource set for scheduling signaling that carries the first service data, wherein
the processing unit is further configured to determine a transmission resource for the first service data, wherein the transmission resource for the first service data is in the first scheduling resource set; and
a transceiver unit, configured to: send the scheduling signaling to a terminal device in the second scheduling resource set, and send the first service data to the terminal device in the transmission resource for the first service data.

17. The network device according to claim 16, wherein the transceiver unit is further configured to:
before sending the scheduling signaling to the terminal device, send a first message to the terminal device, wherein the first message is used to indicate the first scheduling resource set and/or the second scheduling resource set.

18. The network device according to claim 16 or 17, wherein the first scheduling resource set is used to indicate some time-frequency resources occupied by the first service data in all time-frequency resources comprised in one scheduling period.

19. The network device according to any one of claims 16 to 18, wherein the first service data is paging data.

20. The network device according to any one of claims 16 to 18, wherein the first service data is random access response RAR data.

21. The network device according to claim 20, wherein a scheduling resource occupied by the scheduling signaling and a scheduling resource occupied by the first service data are continuous in time domain.

22. The network device according to claim 20 or 21, wherein the transceiver unit is further configured to:
send a second message to the terminal device, wherein the second message is used to indicate a scheduling resource occupied by the terminal device to send a message 3 to the network device, the scheduling resource occupied by the terminal device to send the message 3 to the network device and the scheduling resource occupied by the first service data are spaced by duration of N, and N is equal to a sum of a delay in processing downlink data by the terminal device and a delay in performing uplink scheduling by the terminal device.

23. The network device according to claim 22, wherein the transceiver unit is further configured to:
receive a random access preamble sent by the terminal device; and
the processing unit is further configured to:
determine N based on the received random access preamble or an uplink access resource of the random access preamble.

24. A terminal device, comprising:
a transceiver unit, configured to: receive data in a first scheduling resource set for first service data, and receive, in a second scheduling resource set for scheduling signaling that carries the first service data, the scheduling signaling; and
a processing unit, configured to: parse the scheduling signaling, and obtain the first service data from the data received in the first scheduling resource set.

25. The terminal device according to claim 24, wherein the transceiver unit is further configured to:
before receiving the data in the first scheduling resource set for the first service data, receive a first message sent by the network device, wherein the first message is used to indicate the first scheduling resource set and/or the second scheduling resource set.

26. The terminal device according to claim 24 or 25, wherein the first scheduling resource set is used to indicate some time-frequency resources occupied by the first service data in all time-frequency resources comprised in one scheduling period.

27. The terminal device according to any one of claims 24 to 26, wherein the first service data is paging data.

28. The terminal device according to any one of claims 24 to 26, wherein the first service data is RAR data.

29. The terminal device according to claim 28, wherein the transceiver unit is further configured to:
receive a second message sent by the network device, wherein the second message is used to indicate a scheduling resource occupied by the terminal device to send a message 3 to the network device, the scheduling resource occupied by the network device to send the message 3 and the scheduling resource occupied by the first service data are spaced by duration of N, and N is equal to a sum of a delay in processing downlink data by the terminal device and a delay in performing uplink scheduling by the terminal device; and
send the message 3 to the network device in the scheduling resource indicated by the second message.

30. The terminal device according to any one of claims 24 to 29, wherein the processing unit is further configured to:
controlling enabling and disabling of a receiver of the terminal device based on the first scheduling resource set.

31. A data transmission method, comprising:
configuring, by a network device, a first scheduling resource set for first service data, and configuring a second scheduling resource set for scheduling signaling that carries the first service data;
sending, by the network device, the scheduling signaling to a terminal device in the second scheduling resource set; and
sending, by the network device, the first service data to the terminal device in the first scheduling resource set.

32. The method according to claim 31, wherein the first scheduling resource set is in one slot in time domain.

33. The method according to claim 31, wherein the first scheduling resource set and the second scheduling resource set are in one slot in time domain.

34. The method according to claim 31, wherein the first scheduling resource set is a time-domain resource set, and the first scheduling resource set is in one slot.

35. The method according to claim 31, wherein the first scheduling resource set is a resource set preset in a protocol.

36. The method according to claim 31, wherein different first scheduling resource sets are used for different services.

37. A data transmission method, comprising:
receiving, by a terminal device, data in a first scheduling resource set for first service data, and receiving, in a second scheduling resource set for scheduling signaling that carries the first service data, the scheduling signaling; and
parsing, by the terminal device, the scheduling signaling, and obtaining the first service data from the data received in the first scheduling resource set.

38. The method according to claim 37, wherein the first scheduling resource set is in one slot in time domain.

39. The method according to claim 37, wherein the first scheduling resource set and the second scheduling resource set are in one slot in time domain.

40. The method according to claim 37, wherein the first scheduling resource set is a time-domain resource set, and the first scheduling resource set is in one slot.

41. The method according to claim 37, wherein the first scheduling resource set is a resource set preset in a protocol.

42. The method according to claim 37, wherein different first scheduling resource sets are used for different services.

43. A network device, comprising:
a processing unit, configured to: configure a first scheduling resource set for first service data, and configure a second scheduling resource set for scheduling signaling that carries the first service data; and
a transceiver unit, configured to: send the scheduling signaling to a terminal device in the second scheduling resource set; and send the first service data to the terminal device in the first scheduling resource set.

44. The network device according to claim 43, wherein the first scheduling resource set is in one slot in time domain.

45. The network device according to claim 43, wherein the first scheduling resource set and the second scheduling resource set are in one slot in time domain.

46. The network device according to claim 43, wherein the first scheduling resource set is a time-domain resource set, and the first scheduling resource set is in one slot.

47. The network device according to claim 43, wherein the first scheduling resource set is a resource set preset in a protocol.

48. The network device according to claim 43, wherein different first scheduling resource sets are used for different services.

49. A terminal device, comprising:
a transceiver unit, configured to: receive data in a first scheduling resource set for first service data, and receive, in a second scheduling resource set for scheduling signaling that carries the first service data, the scheduling signaling; and
a processing unit, configured to: parse the scheduling signaling, and obtain the first service data from the data received in the first scheduling resource set.

50. The terminal device according to claim 49, wherein the first scheduling resource set is in one slot in time domain.

51. The terminal device according to claim 49, wherein the first scheduling resource set and the second scheduling resource set are in one slot in time domain.

52. The terminal device according to claim 49, wherein the first scheduling resource set is a time-domain resource set, and the first scheduling resource set is in one slot.

53. The terminal device according to claim 49, wherein the first scheduling resource set is a resource set preset in a protocol.

54. The terminal device according to claim 49, wherein different first scheduling resource sets are used for different services.
